**Europäisches Patentamt**

**European Patent Office**

**Office européen des brevets**

(11) Veröffentlichungsnummer: **0 048 859**
**B1**

## EUROPÄISCHE PATENTSCHRIFT

(45) Veröffentlichungstag der Patentschrift:
**16.05.84**

(51) Int. Cl.³: **H 04 B 7/26,** H 04 L 25/38,
H 04 L 1/20

(21) Anmeldenummer: **81107148.9**

(22) Anmeldetag: **10.09.81**

(54) **Verfahren zur Erkennung von Digitalinformation bei einer digitalen Informationsübertragung, insbesondere Informationsübertragung in Mobilfunk-Kommunikationssystemen.**

(30) Priorität: **29.09.80 DE 3036655**

(43) Veröffentlichungstag der Anmeldung:
**07.04.82 Patentblatt 82/14**

(45) Bekanntmachung des Hinweises auf die Patenterteilung:
**16.05.84 Patentblatt 84/20**

(84) Benannte Vertragsstaaten:
**BE FR GB IT NL SE**

(56) Entgegenhaltungen:
**DE - B - 1 804 719**
**US - A - 2 398 490**
**US - A - 3 217 258**
**US - A - 3 366 930**
**US - A - 3 371 346**
**US - A - 3 938 081**

(73) Patentinhaber: **SIEMENS AKTIENGESELLSCHAFT,**
**Berlin und München Wittelsbacherplatz 2,**
**D-8000 München 2 (DE)**

(72) Erfinder: **Das Gupta, Probodh, Lohengrinstrasse 32,**
**D-8034 Germering (DE)**

Verfahren zur Erkennung von Digitalinformation bei einer digitalen Informationsübertragung, insbesondere Informationsübertragung in Mobilfunk-Kommunikationssystemen

Die vorliegende Erfindung betrifft ein Verfahren zur Erkennung von Digitalinformation bei einer digitalen Informationsübertragung, insbesondere Informationsübertragung in Mobilfunk-Kommunikationssystemen, und eine Schaltungsanordnung zur Durchführung des Verfahrens.

Sprache, Daten und Bild sind die Informationsformen, die in bekannten drahtgebundenen Kommunikationssystemen und in zukünftigen Mobilfunk-Kommunikationssystemen zu übertragen sind. Bei einer Übertragung von Information, insbesondere digitalisierter Information in einem Mobilfunk-Kommunikationssystem, besteht ein Problem darin, daß durch sogenannten Mehrwegausbreitung auf dem Funkweg das bekannte Fading entsteht, das während eines Übertragungsvorganges Informationsbitfehler verursachen kann.

Es sind Verfahren bekannt, mittels derer auf der jeweiligen Empfängerseite aus der dort zur Verfügung stehenden Digitalinformation ein Abtastpuls abgeleitet wird und dieser Abtastpuls dazu verwendet wird, einen Abtastzeitpunkt in den jeweiligen Bereich eines Informationselementes zu legen, in dem der abzutastende, dieses Informationselement repräsentierende Impuls seinen vermutbaren quasistationären Zustand einnimmt, vergl. beispielsweise DE-AS 18 04 719. Diese bekannten Verfahren haben jedoch den Nachteil, daß in solchen Fällen, in denen Informationselemente repräsentierende Impulse durch Störeinflüsse in ihrer Amplitude und/oder in ihrer Phase verzerrt werden, gerade in dem jeweiligen abgetasteten Bereich einen Bitfehler vortäuschen können, obwohl der betreffende Impuls insgesamt betrachtet fehlerfrei sein kann.

In den bisher konzipierten Mobilfunk-Kommunikationssystemen wird eine möglichst günstige Bitfehlerrate durch Anwendung unterschiedlicher Codierungsverfahren, beispielsweise »Forward Error Correcting«, angestrebt. Diese Philosophie steht jedoch dem Bestreben entgegen, eine Vereinheitlichung der Betriebsweisen zu erreichen.

Der vorliegenden Erfindung liegt die Aufgabe zugrunde, ein Verfahren zur Erkennung von Digitalinformation bei einer digitalen Informationsübertragung der genannten Art zu schaffen, mittels dessen günstige Bitfehlerraten erzielt werden können, ohne einen der zuvor genannten Nachteile in Kauf nehmen zu müssen.

Die der Erfindung zugrundeliegende Aufgabe wird durch ein Verfahren zur Erkennung von Digitalinformation bei einer digitalen Informationsübertragung, insbesondere Informationsübertragung in Mobilfunk-Kommunikationssystemen, bei dem ein Abtastimpuls aus der empfangsseitig zur Verfügung stehenden Digitalinformation mit vorzugsweise einem ganzzahligen Vielfachen der Informationstaktfrequenz abgeleitet wird bei dem ein Abtastzeitpunkt in den jeweiligen Bereich eines Informationselementes gelegt ist, in dem der abzutastende, dieses Informationselement repräsentierende Impuls seinen vermutbaren quasistationären Zustand einnimmt, wobei jeweils ein Vergleich eines ersten Abtastergebnisses mit einem oder mehreren folgenden Abtastergebnissen für ein individuelles Informationselement durchgeführt wird und wobei das endgültig gewonnene Signal einer Informationssenke (IS) zugeführt wird, gelöst, das dadurch gekennzeichnet ist, daß zumindest ein weiterer, nicht korrelierter Abtastimpuls aus der empfangsseitig zur Verfügung stehenden Digitalinformation abgeleitet wird, der ein weiteres ganzzahliges Vielfaches der Informationstaktfrequenz aufweist, daß weitere Flanken des Abtastpulses an entsprechend vielen Abtastzeitpunkten innerhalb eines weitergespannten Abtastbereiches des das Informationselement repräsentierenden Impulses gelegt sind, daß eine Mehrheitsentscheidung aufgrund der vorliegenden Abtastergebnisse getroffen wird und daß alle aus den unterschiedlichen Mehrheitsentscheidungen gewonnenen Signale unterschiedlich gewichtet einer weiteren Mehrheitsentscheidung unterworfen werden.

Die vorliegende Erfindung bietet den Vorteil, daß auf einfache Weise eine Mehrfachabtastung der Informationselemente durchführbar ist und an sich insgesamt fehlerfreie, jedoch verzerrte Informationselemente repräsentierende Impulse als fehlerfrei akzeptiert werden können, so daß die Informationsübertragung einen höheren Nutzeffekt erfährt.

Im folgenden wird die Erfindung anhand zweier, ein bevorzugtes Ausführungsbeispiel für die Erfindung betreffenden Figuren im einzelnen erläutert.

Fig. 1 zeigt das Diagramm eines Informationsimpulses mit verschiedenen Abtastpulsen.

Fig. 2 zeigt das Blockschaltbild eines bevorzugten Ausführungsbeispiels für eine Schaltungs nordnung zur Durchführung des erfindungsgemäßen Verfahrens.

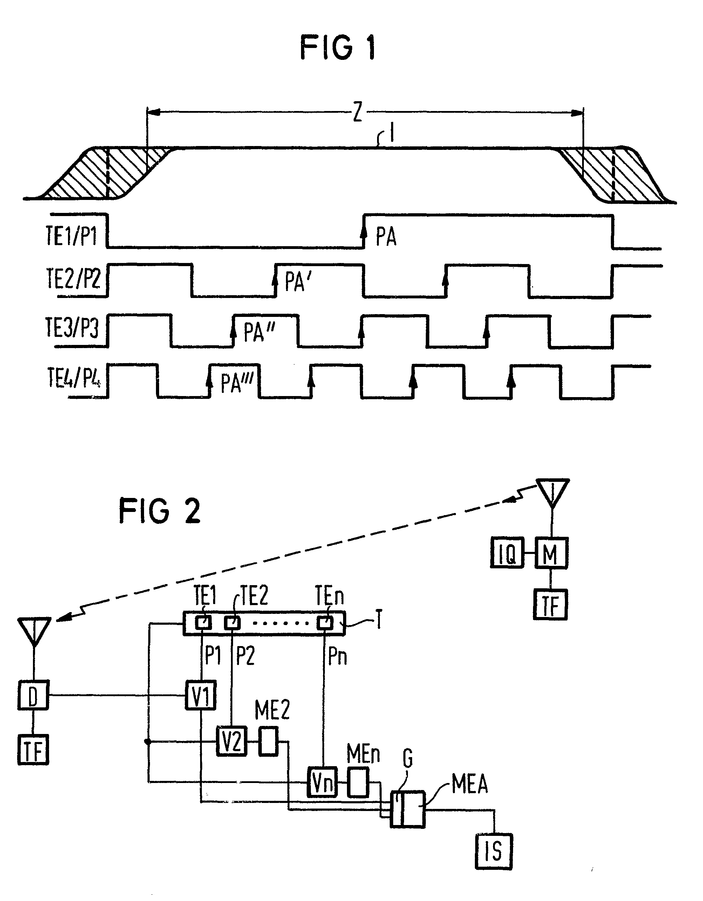

In der empfängerseitigen Schaltungsanordnung zur Durchführung des Verfahrens sind ein Demodulator D, ein Trägerfrequenzgenerator TF, verschiedene nicht korrelierte Takterzeugungseinrichtungen TE1, TE2 . . . TEn, mehrere Vergleicher V1, V2 . . . Vn, mehrere Mehrheitsentscheidungsstufen ME2 . . . MEn, eine Mehrheitsentscheidungsausgabe MEA zur Gewinnung des Informationsinhaltes mit einer vorgeschalteten Gewichtungsstufe G sowie die Informationssenke IS vorgesehen. Senderseitig sind an sich bekannte nur zum Verständnis der Zusammenhänge gezeigte Einrichtungen, wie eine Informationsquelle IQ, ein Trägerfrequenzgenerator TF und ein Modulator M dargestellt, vergl. Fig. 2.

Zum optimalen Abtasten eines ein Informationselement repräsentierenden Impulses I, vergl. Fig. 1, ist erfindungsgemäß vorgesehen, daß außerdem aus der eintreffenden Digital-Information abgeleiteten Abtastpuls, der in einer ersten Takterzeugungseinrichtung TE1 erzeugt wird, weitere nicht korrelierte Abtastpulse mit jeweils einer höheren Frequenz im Vergleich zu der Frequenz der ersten Takterzeugungseinrichtung TE1 mittels weiterer Takterzeugungseinrichtungen TE2 . . . TEn erzeugt werden. Mit den verschiedenen zur Verfügung gestellten Abtastpulsen können unterschiedliche Abtastmodi für das Abtasten des das Informationselement repräsentierenden Impulses I zur Anwendung kommen.

Aus Fig. 1 geht hervor, daß der das Informationselement repräsentierende Impuls I in unterschiedlich breiten Abtastbereichen mittels der unterschiedlichen Abtastpulse P1, P2 . . . Pn abgetastet werden kann. Dafür wird jeweils ein Vergleich eines ersten Abtastergebnisses mit einem oder mehreren folgenden Abtastergebnissen für ein individuelles Informationselement durchgeführt.

Dazu sind an eine Abtasteinrichtung T, die die unterschiedlichen Takterzeugungseinrichtungen TE1, TE2 . . . TEn enthält, jeweils jeder dieser Takterzeugungseinrichtungen zugeordnete individuelle Vergleicher V1, V2 . . . Vn angeschlossen. Mit Hilfe dieser Vergleicher werden die Abtastergebnisse, die sich aus einer Einfachabtastung bzw. einer jeweiligen Mehrfachabtastung eines einzigen individuellen Informationselementes ergeben, miteinander verglichen. An die Vergleicher V2 . . . Vn sind jeweils individuelle Mehrheitsentscheidungsstufen ME2 . . . MEn angeschlossen, die jeweils in an sich bekannter Weise beispielsweise mittels einer Majoritätslogik, dasjenige Abtastergebnis als das »richtige« Abtastergebnis auswählen, das überwiegend in der Vielzahl der einzelnen Abtastergebnisse für ein einziges Informationselement aufgetreten ist. Für den Fall, daß keine Mehrheit zustande kommt, wird der Signalausgang der betreffenden Mehrheitsentscheidungsstufe hochohmig bzw. inaktiv, beispielsweise durch eine Tristate-Logik, gemacht.

Alle derart ermittelten Abtastergebnisse aus den einzelnen Mehrheitsentscheidungsstufen ME2 . . . MEn bzw. dem ersten Vergleicher V1 werden verschieden gewichtet — nämlich mittels der Gewichtungsstufe G — der Mehrheitsentscheidungsausgabe MEA zugeführt, die das endgültige Informationssignal an die Informationssenke IS liefert.

**Patentansprüche**

1. Verfahren zur Erkennung von Digitalinformation bei einer digitalen Informationsübertragung, insbesondere Informationsübertragung in Mobilfunk-Kommunikationssystemen, bei dem ein Abtastimpuls (P1) aus der empfangsseitig zur Verfügung stehenden Digitalinformation mit vorzugsweise einem ganzzahligen Vielfachen der Informationstaktfrequenz abgeleitet wird, bei dem ein Abtastzeitpunkt (PA) in den jeweiligen Bereich eines Informationselementes gelegt ist, in dem der abzutastende, dieses Informationselement repräsentierende Impuls (I) seinen vermutbaren quasistationären Zustand einnimmt, wobei jeweils ein Vergleich (V1 . . . Vn) eines ersten Abtastergebnisses mit einem oder mehreren folgenden Abtastergebnissen für ein individuelles Informationselement durchgeführt wird und wobei das endgültig gewonnene Signal einer Informationssenke (IS) zugeführt wird, dadurch gekennzeichnet, daß zumindest ein weiterer nicht korrelierter Abtastimpuls (P2) aus der empfangsseitig zur Verfügung stehenden Digitalinformation abgeleitet wird, der ein weiteres ganzzahliges Vielfaches der Informationstaktfrequenz aufweist, daß weitere Flanken des Abtastimpulses (P2) an entsprechend vielen Abtastzeitpunkten (PA') innerhalb eines weiter gespannten Abtastbereiches (Z) des das Informationselement repräsentierenden Impulses (I) gelegt sind, daß eine Mehrheitsentscheidung aufgrund der vorliegenden Abtastergebnisse getroffen wird und daß alle aus den unterschiedlichen Mehrheitsentscheidungen (ME2 . . . MEw) gewonnenen Signale unterschiedlich gewichtet (G) einer weiteren Mehrheitsentscheidung (MEA) unterworfen werden.

2. Schaltungsanordnung zur Durchführung des Verfahrens nach Anspruch 1, dadurch gekennzeichnet, daß einem an sich bekannten Demodulator (D), an den in an sich bekannter Weise ein Trägerfrequenzgenerator (TF) angeschlossen ist, ein Antenneneingangssignal über einen Signaleingang zuführbar ist, daß an einen Signalausgang des Demodulators (D) Signaleingänge einer Vielzahl von an sich bekannten Vergleichern (V1, V2 . . . Vn) und Signaleingänge einer Vielzahl von verschiedenen, nicht korrelierten, Takterzeugungseinrichtungen (TE1, TE2 . . . TEn) angeschlossen sind, jedem Vergleicher (V1, V2 . . . Vn) jeweils der zugehörige Abtastpuls (P1, P2 . . . Pn) zugeführt wird, daß jeweils an den Signalausgang des zweiten bis n-ten Vergleichers (V2 . . . Vn) eine an sich bekannte Mehrheitsentscheidungsstufe (ME2 . . . bzw. MEn) mit ihrem Signaleingang angeschlossen ist, daß die Signalausgänge der Mehrheitsentscheidungsstufen (ME2 . . . MEn) der Signalausgang des ersten Vergleichers (V1) jeweils mit einem individuellen Signaleingang einer Mehrheitsentscheidungsausgabe (MEA), der eine Gewichtungsstufe (G) vorgeschaltet ist, verbunden sind und daß an einen Signalausgang der Mehrheitsentscheidungsausgabe (MEA) die Informationssenke (IS) angeschlossen ist.

**Claims**

1. Method of recognising digital information during digital information transmission, in particular information transmission in mobile radio communications systems, wherein a sampling pulse (P1) is obtained from the digital information available at the receiving end with preferable a whole-numbered multiple of the information clock pulse frequency, wherein a sampling time (PA) is interposed into the respective zone of an information element in which the pulse (I), which is to be sampled and which represents this information element, occupies its expected quasi-stationary state, wherein a comparison (V1 ... Vn) is conducted in respect of each first sample result with one or more following sample results for an individual information element, and wherein the signal which is finally obtained is fed to an information sink (IS), characterised in that at least one further non-correlated sampling pulse (P2) is obtained from the digital information available at the receiving end which pulse presents a further whole-numbered multiple of the information clock pulse frequency, that further flanks of the sampling pulse (P2) are located at a corresponding number of sampling times (PA') within a more extensive sampling zone (Z) of the pulse (I) which represents the information element, that a majority decision is made on the basis of the available sampling results, and that all the signals obtained from the varuous majority decisions (ME2 ... MEw), having been variously weighted (G), are subjected to a further majorety decision (MEA).

2. Circuit arrangement for the implementation of the method claimed in claim 1, characterised in that a demodulator (D) known per se, to which a carrier frequency generator (TF) is connected in known manner, can be supplied with an antenna input signal via a signal input, that a signal output of the demodulator (D) is connected to signal inputs of a plurality of comparators (V1, V2 ... Vn) known per se and to signal inputs of a plurality of different, non-correlated clock pulse generators (TE1, TE2 ... TEn), each comparator (V1, V2 ... Vn) is supplied with the associated sampling pulse (P1, P2 ... Pn), that the signal output of the second n-th comparator (V2 ... Vn) is in each case connected to a majority decision stage (ME2 ... and MEn) known per se at its signal input, that the signal outputs of the majority decision stages (ME2 ... MEn), the signal output of the first comparator (V1) are each connected to an individual signal input of a majority decison output (MEA), which is preceded by a weighting stage (G), and that the information sink (IS) is connected to a signal output of the majority decision output (MEA).

**Revendications**

1. Procédé pour la reconnaissance d'informations numériques lors d'une transmission numérique d'informations dans des systèmes de communication entre des postes radioélectriques mobiles, dans lequel une impulsion d'échantillonnage (P1) est dérivée de l'information numérique disponible côté réception, de préférence avec une fréquence que est un multiple entier de la fréquence de cadence des informations, dans lequel un instant d'échantillonnage (PA) est positionné dans la zone respective d'un élément d'information dans laquelle l'impulsion (I) qui représente cette information et qui doit être échantillonnée prend son état quasistationnaire probable, une comparaison (V1 ... Vn) d'un premier résultat d'échantillonnage avec un ou plusieurs résultats d'échantillonnage suivants étant respectivement effectuée pour un élément d'information individuel et le signal finalement obtenu obtenu étant appliqué à un collecteur d'informations (IS), caractérisé par le fait que de l'information numérique disponible côté réception est dérivée au moins une autre impulsion d'échantillonnage non corrélée qui possède une fréquence qui est un autre multiple entier de la fréquence de cadence des informations, que d'autres flancs de l'impulsion d'échantillonnage (P2) sont positionnés à un nombre correspondant d'instants d'échantillonnage (PA') à l'intérieur d'une zone d'échantillonnage (Z) de dimension plus importante de l'impulsion (I) représentant l'élément d'information, qu'une décision majoritaire est effectuée sur la base des résultats d'échantillonnage existants, et que tous les signaux obtenus à partir des différentes décisions majoritaires (ME2 ... MEn) sont soumis à une autre décision majoritaire (MEA) avec une pondération différente (G).

2. Circuit pour la mise en oeuvre du procédé suivant la revendication 1, caractérisé par le fait qu'à un démodulateur (D) connu en soi est raccordé de façon connue en soi un générateur de fréquence porteuse (TF), qu'un signal d'entrée d'antenne peut être appliqué par l'intermédiaire d'une entrée de signaux, qu'à une entrée de signaux du démodulateur (D) sont raccordées des entrées de signaux d'un grand nombre de comparateurs connus en soi (V1, V2 ... Vn) et des entrées de signaux d'un grand nombre de différents dispositifs générateurs de cadence (TE1, TE2 ... TEn) non corrélés, qu'à chaque comparateur (V1, V2 ... Vn) est respectivement appliquée l'impulsion d'échantillonnage associée (P1, P2 ... Pn), qu'à la sortie de signaux du second au nième comparateur (V2 ... Vn) est respectivement raccordée l'entrée de signaux d'un étage de décision majoritaire (ME2 ... ou MEn) connu en soi, que les sorties de signaux des étages de décision majoritaire (ME2 ... MEn) et la sortie de signaux du premier comparateur (V1) sont respectivement reliées à une entrée de signaux individuelle d'un circuit de sortie de décision majoritaire (MEA), en amont duquel est monté un étage de pondération (G), et qu'à une sortie de signaux du circuit de sortie de décision majoritaire (MEA) est raccordé le collecteur d'informations (IS).

# FIG 1

# FIG 2